# DEMANDE DE BREVET EUROPEEN

(11) **EP 1 649 925 A1**
(43) Date de publication de la demande: **26.04.2006**
(21) Numéro de dépôt: 05292166.5
(22) Date de dépôt: 14.10.2005
(51) Int. Cl.: B01F 3/10, C08J 3/05, C08J 3/03

(54) **Emulsions bitumineuses, leur procédé de préparation et leur utilisation pour la réalisation de matériaux et de tapis routiers**

(30) Priorité: 19.10.2004 FR 0411077
(71) Demandeur: CECA S.A., 92800 Puteaux (FR)
(72) Inventeur: Bourrel, Maurice, 64000 Pau (FR); Jorda, Eric, 69005 Lyon (FR); Lauranson, Didier, 64140 Lons (FR); Verzaro, Francis, 64121 Serris-Castet (FR)
(74) Mandataire: Treuil, Claude

(57) **Abrégé**

La présente invention concerne des émulsions de bitume utilisables dans les applications routières pour la réalisation d'enrobés à froid, de graves-émulsions et de tapis routiers obtenus à température ambiante dont la cohésion au jeune âge est nettement améliorée par rapport aux enrobés à froid, graves émulsions et tapis routiers de l'art antérieur.

Ces émulsions bitumineuses sont caractérisées par un diamètre médian inférieur ou égal à 0,6 µm et préférentiellement inférieur ou égal à 0,5 µm.

## Description

La présente invention concerne la fabrication d'émulsions bitumineuses ainsi que de tapis routiers obtenus à température ambiante (i-e en général entre 0 °C et +40 °C) à partir de granulats et de ces émulsions.

Les émulsions bitumineuses comprennent dans la plupart des cas un liant bitumineux, un tensioactif cationique -on parle alors d'émulsions cationiques-, ou un tensioactif anionique, -on parle alors d'émulsions anioniques- et de l'eau. Les émulsions cationiques sont généralement préférées, à la fois pour la rapidité de leur rupture sur les granulats et pour les qualités d'adhésivité entre les granulats et l'émulsion rompue conférant aux tapis routiers qui viennent juste d'être réalisés de bonnes propriétés mécaniques.

Les matériaux bitumineux obtenus par enrobage ou mise en contact de granulats à l'aide d'émulsions bitumineuses sont connus de longue date. La profession distingue en particulier les enrobés à froid coulés, ouverts, semi-denses, denses, stockables, les grave-émulsions, les enduits superficiels et les couches d'accrochage.

Pour la réalisation de tapis routiers, un type de matériaux bitumineux comprend les enrobés à froid ouverts, semi-denses, denses, les enrobés à froid stockables ainsi que les grave-émulsions. Le choix optimisé de l'émulsion (nature et quantité de l'émulsifiant, concentration en bitume, pH) permet de résoudre dans la majorité des cas, partiellement ou totalement, les problèmes d'enrobage, de transport et de mise en place de l'enrobé sous sa forme foisonnée. Cependant, une fois l'enrobé étalé sous forme de tapis, intervient l'étape de compactage ou de serrage dont le rôle est d'assurer la montée en cohésion, c'est-à-dire une bonne adhésivité entre bitume et granulats, afin de permettre au tapis de supporter le trafic, temporairement interrompu pendant la mise en place dans le cas de réfection ou de rénovation de chaussées. Cette cohésion est obtenue par le serrage du matériau, accompagné généralement de l'expulsion de phase aqueuse et d'air. Les matériaux enrobés à froid présentent un fort pouvoir frottant, ce qui gêne le serrage : les compacités obtenues à froid sont très souvent inférieures aux compacités obtenues à partir des mêmes matériaux enrobés à chaud avec le même liant. Or il est bien connu de l'homme de l'art que la valeur de la compacité et le départ d'eau au compactage influent sur la cohésion du matériau serré à froid. Ainsi, on constate qu'actuellement le succès dans la réalisation de tapis routiers soumis à des trafics intenses (T1 ou plus) ne dépend pas que de la technique mais aussi des conditions météorologiques le jour du chantier et même le jour suivant : un soleil franc, une température élevée et/ou un vent suffisant contribuent au séchage du tapis et à sa montée en cohésion.

Dans tous les cas de mise en oeuvre d'enrobés à froid considérés ici (stockables, ouverts, semi-denses, denses et graves-émulsions), (ré)ouvrir rapidement à la circulation pose d'autant plus de problèmes que le trafic est intense. Dans le cas d'une ouverture précoce, un départ de granulats se produit, ce qui fragilise le tapis vis-à-vis des agressions et dégrade sa qualité de surface. Il est donc important d'obtenir une cohésion importante le plus rapidement possible pour éviter de compromettre les propriétés finales du tapis par une dégradation importante.

Cette amélioration de cohésion rapide peut-être apportée partiellement par un accroissement de l'efficacité du compactage par l'ajout d'additifs comme ceux décrits dans EP1.057.873 et WO 02/00795, mais cette amélioration est limitée. Elle peut aussi être apportée par ajout d'une quantité importante de ciment comme décrit dans WO 02/066394, mais le surcoût est alors important et les émulsions doivent être très chargées en tensioactif non ionique, ce qui pose des problèmes de résistance à l'eau par la suite. Une autre solution consiste à ajouter des agents rupteurs à différents moments du procédé comme décrit dans WO 94/23129 et dans les brevets cités dans ce dernier. Ces méthodes sont généralement coûteuses et nécessitent des modifications d'appareillage, voir de nouveaux appareillages dédiés.

Au vu de ce qui précède, il apparaît donc que le comportement des enrobés à froid de l'art antérieur souffre d'un fort défaut de cohésion au jeune âge en comparaison des techniques à chaud. Cela se traduit en pratique, par une limitation quasi exclusive de l'utilisation des enrobés à froid pour des chaussées à trafic moyen ou faible.

### Exposé de l'invention

La présente invention propose des émulsions bitumineuses, des enrobés à froid et des graves émulsions les contenant, obtenus par enrobage et pose avec du matériel routier standard, dont la cohésion au jeune âge (dans les premières 24 heures) est nettement améliorée (doublée ou plus) par rapport aux enrobés à froid et graves émulsions de l'art antérieur. La présente invention s'avère particulièrement intéressante pour les chaussées à fort trafic, dans la mesure où elle permet d'obtenir des tapis routiers dont la cohésion est suffisante pour stabiliser l'ouvrage avant réouverture au trafic sans qu'il ne soit nécessaire d'attendre plusieurs jours.

Les émulsions selon l'invention sont caractérisées par un diamètre médian (mesuré par granulométrie laser) inférieur ou égal à 0,6 µm.

Par diamètre médian de l'émulsion, on entend la valeur du diamètre des particules de bitume dispersées qui divise exactement la population répertoriée en deux moitiés de volume égal.

Dans l'industrie routière, les émulsions bitumineuses présentent un diamètre médian (mesuré par granulométrie laser) le plus souvent compris entre 2 et 10 µm, des émulsions bitumineuses de taille inférieure ne peuvent être fabriquées au stade industriel avec les appareils usuels, tels que moulin colloïdal, même si on peut, à l'échelle et avec des appareils de laboratoire préparer des émulsions de diamètre médian inférieur à 2 µm, typiquement voisin de 1 µm, en mettant en oeuvre des appareils et/ou des modes opératoires particulièrement complexes qu'il n'est pas possible de transposer à l'échelle industrielle tant pour des raisons économiques que techniques.

US 4.832.747 propose une solution basée sur des mélangeurs statiques pour fabriquer des émulsions de diamètre 2 à 8 µm pouvant être en théorie étendue au domaine 0,5 à 8 µm bien qu'aucun exemple d'émulsion bitumineuse inférieur à 2,6 µm ne soit fourni dans ce document. Cette solution semble a priori industrialisable tout en étant particulièrement complexe.

EP 999.890 B1 cite la possibilité de fabriquer des émulsions de bitume de diamètre inférieur à 2 µm en se plaçant dans des conditions très concentrées en phase dispersée, mais dans aucun exemple, le diamètre médian des émulsions bitumineuses n'est inférieur à 0,8 µm et le seul tensioactif utilisé (TTAB) de type quaternaire ne se déstabilise pas en présence de granulats : il n'y a donc ni montée en cohésion ni rupture de l'émulsion au compactage ce qui interdit une telle solution technique pour les applications routières.

Le brevet US 5.539.021 enseigne comment faire en continu des émulsions de polymères de diamètre médian de l'ordre de 0,5 µm : l'émulsification se fait en phase concentrée et le diamètre est réglé en jouant sur le ratio phase dispersante /phase dispersée. Ce brevet ne suggère pas d'utiliser ce procédé avec du bitume comme phase dispersée.

La présente invention a également pour objet un procédé permettant de réaliser des émulsions de bitume de diamètre médian inférieur ou égal à 0,6 µm, de préférence 0,5 µm, dont le mélange avec les granulats choisis conduit à des enrobés à froid ou des graves émulsions de cohésion supérieures à ceux réalisés avec les émulsions bitumineuses industrielles classiques.

Le procédé de préparation d'émulsion bitumineuse selon l'invention est caractérisé en ce que :
a/ on prépare une solution aqueuse concentrée de tensioactif(s) (comprenant plus de 30% en poids de tensioactif), contenant éventuellement au moins un acide quand un tensioactif cationique est mis en oeuvre ou une base quand un tensioactif anionique est mis en oeuvre,
b/ on procède à l'ajout progressif de bitume chauffé à une température comprise entre 50 et 120 °C et avec un débit contrôlé à ladite solution concentrée de tensioactif(s) maintenue sous agitation, jusqu'à ce que la teneur en bitume de l'émulsion à la fin de cette première phase d'émulsification soit supérieure ou égale à 90% en poids,
c/ puis la teneur en bitume de l'émulsion est abaissée jusqu'à une teneur comprise de préférence entre 60 % et 80 % en poids par dilution sous agitation avec de l'eau dont la température est comprise entre 20 et 90°C, et de préférence entre 40 et 80 °C.

A l'issue de l'étape c/, la teneur en bitume de l'émulsion correspond à la teneur de l'émulsion prête à utiliser en application routière pour la réalisation d'enrobés à froid et/ou de graves-émulsions et de matériaux obtenus par enrobage ou par mise en contact de granulats, de matériaux de recyclage, d'agrégats d'enrobé (ou mélange de ces produits) et de ladite émulsion bitumineuse.

Le système d'agitation des étapes b/ et c/ peut être une turbine, une ancre raclante, une hélice ou de préférence un fouet dont la vitesse d'agitation est supérieure à 50 tr/min ou tout autre système équivalent en termes de capacité de mélangeage.

La concentration en tensioactif(s) des émulsions selon l'invention est en général supérieure à 12 kg par tonne d'émulsion.

Parmi les tensioactifs ou émulsifiants utilisables pour la fabrication des émulsions cationiques selon l'invention, on peut citer les tensioactifs cationiques usuels et plus particulièrement ceux qui sont liquides à température ambiante (typiquement 0-40 °C)

On peut par exemple utiliser les alkyl(ène)polyamines, les sels d'alky(ène)lammonium quaternaire, les alkyl(ène)amidoamines et leurs dérivés de cyclisation alkyl(ène)imidazolines, avec une chaîne alkyle comprenant entre 8 et 22 atomes de carbone, les alkyl(ène) polyamines oxyalkylées et plus particulièrement la suif dipropylène triamine oxypropylée (amines, N-suif propanol-2 [[[(amino-3 propyl)amino]-3 propyl]imino]-1,1'bis, RN = 97592-79-5) cette dernière étant industriellement bien représentée par le Polyram®SL commercialisé par CECA S.A. On peut utiliser aussi des mélanges de tensioactifs cationiques ou de tensioactifs cationiques et de cotensioactifs non ioniques, la limitation étant liée à la concentration maximale acceptable en solution pour éviter la gélification. On ne sortirait pas du cadre de l'invention en mettant en oeuvre toute technique connue de l'homme de l'art permettant d'éviter la formation de gels dans les solutions de tensioactifs concentrées comme l'utilisation de cosolvants et/ou d'hydrotropes.

On préfère ajouter aux phases aqueuses de tensioactif(s) cationique(s) une certaine quantité d'acide(s), en général choisi(s) parmi HCl, H₃PO₄.

Les bitumes ou liants bitumineux peuvent être choisis parmi les liants bitumineux usuellement mis en oeuvre dans les émulsions bitumineuses pour grave-émulsions et/ou enrobés à froid pour couches de roulement ; leur pénétrabilité est en général comprise entre 70/100 et 500. Leur nature chimique dépend du ou des bruts dont ils sont issus. On distingue les bitumes paraffiniques, préférés par la demanderesse, et les bruts naphténiques.

Les émulsions peuvent être préparées avec un ou plusieurs liants bitumineux ; dans ce dernier cas, les différents liants peuvent être mélangés à chaud avant l'émulsification ou deux émulsions (ou plus) peuvent être préparées contenant chacune au moins un liant, que l'on mélangera ensuite pour donner une émulsion dite mixte, qui sera mise en contact avec les granulats pour la réalisation de l'enrobé.

Les enrobés à froid et grave-émulsions selon l'invention peuvent être obtenus par malaxage des granulats humidifiés avec de l'eau d'ajout et de l'émulsion bitumeuse définie ci-dessus selon les techniques et au moyen d'appareillages connus et utilisés de manière habituelle dans l'industrie routière. Les étapes d'enrobage, de rupture de l'émulsion, de transport éventuel, de déchargement et de mise en place sont réalisées selon le procédé habituel de l'entreprise routière et présentent l'avantage de ne pas nécessiter de modifications du matériel ou de modifications des réglages, tout en montrant une cohésion améliorée une fois toutes les étapes précédant l'ouverture au trafic réalisées.

L'invention concerne également les matériaux obtenus par enrobage ou par mise en contact de granulats, de matériaux de recyclage, d'agrégats d'enrobé (ou mélange de ces produits) et d'une émulsion bitumineuse selon l'invention telle que définie plus haut. Par agrégats d'enrobés, on entend les matériaux issus de la destruction de tapis d'enrobés et par matériaux de recyclage, tout type de matériaux issus de la récupération de déchets industriels susceptibles d'êtres recyclés dans la fabrication d'enrobés routiers (matériaux de démolition, mâchefer, laitiers sidérurgiques, pneus ...).

### EXEMPLES

### Préparation de solutions de tensioactif concentrées

On place un becher de 500 ml dans un bain-marie muni à la fois d'une hélice d'agitation dont la vitesse peut atteindre 300 tr/min et d'une électrode pH avec compensation de température.

On introduit dans le becher la quantité d'eau nécessaire (250 ml) pour fabriquer la solution de tensioactif concentrée désirée et on démarre l'agitation et la chauffe à T=60 °C de l'eau contenue dans le becher.

Parallèlement, on procède au chauffage du tensioactif choisi à T=60°C sur une plaque chauffante régulée. Lorsque l'eau et le tensioactif sont en température (T=60 °C), on ajoute le tensioactif avec un compte goutte jusqu'à un pH de 5-6 environ. On acidifie alors le milieu en ajoutant HCl 37% (à température ambiante) jusqu'à obtenir un pH compris entre 1 et 2 et de manière à dissoudre tout le tensioactif ajouté.

On continue à ajouter du tensioactif jusqu'à obtenir un pH compris entre 5 et 6 environ, puis on acidifie à nouveau jusqu'à obtenir un pH compris entre 1 et 2 et ainsi de suite jusqu'à apparition d'un peu de gel qui ne se dissout pas dans la solution (ce qui correspond à une concentration en tensioactif voisine de 23 % pour le Polyram® SL). A ce stade, on acidifie jusqu'à obtenir un pH de 0,6.

On poursuit ensuite l'ajout de tensioactif à raison d'environ 1 g toutes les 5 minutes en ajoutant à chaque fois la quantité d'acide nécessaire pour ramener le pH vers 0,5-0,6 environ.

Ainsi, on peut arriver jusqu'à une concentration en tensioactif voisine de 28 %. (la pesée de l'ensemble (becher + hélice) permet de contrôler la concentration en tensioactif en cours de fabrication).

Pour aller au-delà de 28 % de concentration en tensioactif (jusqu'à 31% par exemple), il faut continuer de faire évaporer l'eau en faisant des ajouts d'acide quand on voit un peu de gel se former. On arrête l'évaporation et l'ajout d'acide lorsque l'on est à la bonne concentration en tensioactif, vérifiée par pesée.

### Préparation et analyse de l'émulsion bitumineuse

Sur une plaque chauffante régulée, on fait chauffer 100 g de bitume à une température de
108 °C pour un bitume de pénétrabilité 70/100, de viscosité égale à 1,7 Pa.s de type paraffinique (provenanceTotal Feyzin),

100 °C pour un bitume Nynas B 190 de pénétrabilité 190, de viscosité égale à 1,7 Pa.s, de type naphténique.

En parallèle, on fait chauffer 60 g d'H₂O désionisée à T=60°C également sur une plaque chauffante régulée. Dans un becher de 600 cm³ (forme haute : 12 cm hauteur et 8,5 cm de diamètre) muni d'un système d'agitation on introduit à température ambiante 7 g de solution concentrée de tensioactif préparée selon le mode opératoire du paragraphe précédent.

Le système d'agitation qui repose sur le fond du bécher est un fouet de cuisine métallique de diamètre 6 cm, d'une hauteur de 13 cm monté sur tige d'agitateur ; le moteur d'agitation Leroy-Somer a une puissance de 245 W et développe un couple de 0,8 N.m, la vitesse est préréglée à 600 tr/min.

Après que l'eau désionisée et le bitume soient en température, on démarre la préparation de l'émulsion
- en démarrant le fouet (V=600 tr/min)
- puis en versant progressivement le bitume chaud sur l'émulsion concentrée pendant 1min -1min15 s (on constate qu'une durée inférieure ne convient pas : l'émulsification est incomplète ou donne naissance à une émulsion inverse)
- lorsque tout le bitume est versé, on attend 15 à 20 s sous agitation avant de verser l'eau désionisée en environ 5 s sur l'émulsion de bitume concentrée,
- on laisse encore tourner le fouet pendant environ 1 min 30 s pour homogénéiser l'émulsion.

On obtient 167 g d'émulsion à 60 % de bitume dont l'analyse granulométrique est réalisée à l'aide d'un granulomètre laser Mastersizer S de Malvern Instruments. Les coefficients pris pour les calculs sont (1,62 ; 0,0055) pour le bitume et 1,33 pour l'eau.

### Fabrication et mesure de cohésion d'enrobés à froid

La mesure de cohésion des enrobés est réalisée à l'aide d'un appareil à cisaillement circulaire modèle : RST 01.PC conçu par M. Dietmar Schulze (Allemagne) qui impose une déformation jusqu'à la rupture à un enrobé compacté qui est placé dans une cellule annulaire surmontée d'un couvercle relié à 2 capteurs de force. La cellule annulaire est composée de 2 éléments : une partie inférieure munie d'ailettes qui contient l'enrobé et un couvercle lui aussi muni d'ailettes.

Les caractéristiques de la partie inférieure de la cellule annulaire utilisée sont les suivantes : petit diamètre=100 mm, grand diamètre=200 mm, profondeur=40 mm, et 20 ailettes de 44 mm de largeur et 5 mm de hauteur qui sont vissées sur son fond

Les caractéristiques du couvercle de la cellule annulaire utilisée sont les suivantes : petit diamètre=105 mm, grand diamètre=195 mm et 20 ailettes de 44 mm de largeur et 5 mm de hauteur qui sont vissées dessous

### 1^{ère} étape : Fabrication de l'enrobé et mise en place de l'enrobé dans la cellule de mesure annulaire de l'appareil à cisaillement circulaire

On fabrique environ 1.350 g d'enrobé de la manière suivante :
- dans un bol en inox, on place 1.200 g de granulats de composition granulométrique connue,
- puis on ajoute l'eau en quantité requise par rapport aux granulats,
- on mélange le tout (quelques s) avec une spatule pour bien répartir l'eau sur tous les granulats,
- on ajoute rapidement la quantité d'émulsion de bitume requise sur les granulats,
- et on continue à mélanger avec une spatule jusqu'à la rupture de l'émulsion sur les granulats,
- on remplit la partie inférieure de la cellule annulaire de l'appareil de mesure avec l'enrobé ainsi préparé en le répartissant le mieux possible,
- on attend ensuite 45 min après la rupture de l'émulsion sur le granulat avant de compacter l'enrobé à l'intérieur de la cellule de mesure avec un compacteur à rouleaux de notre conception décrit ci-dessous qui permet de produire un réarrangement au sein de l'enrobé afin de simuler au mieux ce qui se passe sur le terrain lors de cette phase.

### 2^{ème} étape : Compactage de l'enrobé à l'intérieur de la cellule de mesure, mise en place du couvercle pour faire l'empreinte des ailettes dans l'enrobé avant son séchage et retrait du couvercle pour le séchage

Le compactage de l'enrobé à l'intérieur de la cellule de mesure est réalisé à l'aide d'un compacteur à rouleaux de notre conception, constitué par un bras pouvant tourner autour de son axe central grâce à un moteur électrique. Ce bras est équipé d'un rouleau en acier inox à chaque extrémité et est muni d'un support sur lequel on peut mettre plusieurs masses de 10 kg chacune, de manière à pouvoir adapter le compactage à ses propres besoins.

### Caractéristiques du compacteur :

La largeur de chacun des 2 rouleaux en contact avec l'enrobé est égale à 45 mm ; le support du bras peut accepter jusqu'à 70 kg de charge ; le moteur électrique qui fait tourner le bras du compacteur a une puissance égale à 1.400 W, il est à la fois équipé d'un variateur de fréquence et d'un réducteur qui divise la vitesse de rotation du moteur par 5 (ce qui correspond à une vitesse de rotation maximum de 300 tr/min)

Pour compacter un enrobé on procède de la manière suivante :
- on pose le bras avec ses 2 rouleaux sur l'enrobé,
- on charge le support du bras avec la masse d'enrobé choisie,
- on fait tourner le bras autour de son axe central à la vitesse désirée en faisant varier la fréquence d'alimentation du moteur électrique d'entraînement.

Les conditions de compactage utilisées pour nos essais sont les suivantes (la charge est augmentée progressivement, de manière à ne pas enfoncer trop les deux rouleaux dans l'enrobé avant de démarrer la rotation du bras) :
- 1 min avec 0 kg de charge sur le support du bras à V=1 km/h au centre de l'anneau,
- 1 min avec 10 kg de charge sur le support du bras à V=1 km/h au centre de l'anneau,
- 1 min avec 20 kg de charge sur le support du bras à V=1 km/h au centre de l'anneau,
- 1 min avec 30 kg de charge sur le support du bras à V=1 km/h au centre de l'anneau,
- 1 min avec 40 kg de charge sur le support du bras à V=1 km/h au centre de l'anneau,
- 1 min avec 50 kg de charge sur le support du bras à V=1km/h au centre de l'anneau

Ces conditions de compactage permettent d'obtenir des compacités comprises entre 76 et 81 % selon les enrobés compactés (mesurées par différences de hauteur dans la cellule de mesure)

Lorsque l'enrobé est compacté, on pose le couvercle de la cellule de mesure sur sa surface et on enfonce les ailettes de 5 mm en utilisant un banc de charge de marque Instron modèle 1186 (équipé d'un capteur de force de 200 kN) pour faire l'empreinte des ailettes du couvercle à la surface de l'enrobé. Dés que l'on a terminé d'enfoncer le couvercle, on sort celui-ci pour laisser sécher l'enrobé à l'air libre pendant la durée voulue.

### 3^{ème} étape : Mesure de la cohésion des enrobés

- lorsque le temps de séchage de l'enrobé est écoulé, on remet le couvercle en place à la surface de l'enrobé en prenant soin de remettre les ailettes dans leurs empreintes,
- on place la cellule annulaire surmontée de son couvercle sur l'appareil de mesure de cohésion décrit précédemment équipé de 2 capteurs de force de 50 kg chacun,
- on relie le couvercle aux 2 capteurs de force de l'appareil,
- on lance la mesure de cohésion de l'enrobé en imposant une pression de 0.2 bar sur le couvercle et une déformation circulaire en faisant tourner la cellule annulaire à V=2 °/min par rapport au couvercle qui reste fixe entre les 2 capteurs de force, de manière à atteindre la rupture de l'enrobé et aller un peu au-delà,
- en même temps, l'appareil enregistre la force de résistance à la déformation de l'enrobé et le temps, ce qui permet d'obtenir des graphes : Force=f(temps) et de déterminer la force nécessaire à la rupture de l'enrobé. La valeur retenue comme valeur de cohésion est la force maximale observée avant rupture à laquelle on soustrait la force générée par le frottement des granulats (force qui devient constante en fonction du temps après rupture).

L'amélioration des performances des émulsions et des produits routiers selon la présente invention est appréciée en comparaison avec des émulsions et des produits routiers selon l'art antérieur (préparées à l'aide d'un moulin colloïdal) et dont le diamètre médian de l'émulsion est différent.

Le même émulsifiant cationique a été mis en oeuvre dans les différentes formules d'émulsions testées, avec une concentration en tensioactif variable selon les formules des émulsions de manière à faire varier le diamètre médian.

### Exemple 1

On prépare 6 émulsions de diamètre médian différent contenant à titre de tensioactif cationique du Polyram® SL (commercialisé par la société CECA) et le même bitume (pénétrabilité 70/100 commercialisé par la société Total, teneur massique de 60%) : 2 émulsions (S1 et S2) sont préparées Selon une méthode industrielle classique avec un moulin colloïdal (groupe de production de laboratoire de marque Emulbitume) et 4 émulsions sont préparées selon la méthode décrite au paragraphe ci-dessus « préparation de l'émulsion ». Parmi les 4 émulsions fabriquées selon la méthode décrite au paragraphe « préparation de l'émulsion », 2 émulsions (E5 et E6) sont des émulsions selon l'invention, les 2 autres (C3 et C4) sont utilisées à titre de comparaison tout comme les 2 émulsions S1 et S2.

Pour les émulsions préparées selon la méthode décrite au paragraphe « préparation de l'émulsion », la variation de granulométrie est obtenue par modification de la concentration en tensioactif de l'émulsion mise en oeuvre.

Pour S1 et S2, on fait varier la granulométrie de l'émulsion en jouant sur la vitesse de rotation du moulin colloïdal.

Les caractéristiques de ces 6 émulsions sont réunies dans le tableau 1.

**Tableau 1**

| Emulsion | Teneur en tensioactif de l'émulsion (kg/t) | Concentration en tensioactif de la solution de tensioactif (%) | Diamètre médian (µm) |
|---|---|---|---|
| S1 | 13 | 3,2 | 6,1 |
| S2 | 13 | 3,2 | 2,6 |
| C3 | 10,8 | 25,8 | 1,3 |
| C4 | 11,7 | 28 | 0,7 |
| E5 | 13 | 31 | 0,5 |
| E6 | 14,2 | 33,9 | 0,4 |

A l'aide de chacune de ces émulsions, on prépare un enrobé à froid selon le mode opératoire décrit au paragraphe « fabrication et mesure de cohésion des enrobés ». Les granulats utilisés sont des silico-calcaires commercialisés sous la dénomination "Neste" dont la distribution granulométrique est la suivante :

| | |
|---|---|
| 0/2 mm | 40 % |
| 2/4 mm | 12 % |
| 4/6 mm | 48 % |

La teneur en filler (particules de granulats passant au travers d'un tamis de 80 µm) est de l'ordre de 8 % en poids.

La teneur en eau d'ajout dans l'enrobé est de 3 g pour 100 g de granulats.

La teneur en émulsion au sein de l'enrobé est de 9,5 g pour 100 g de granulats.

La cohésion des enrobés ainsi fabriqués est testée selon le protocole décrit au paragraphe « Fabrication et mesure de cohésion des enrobés », le temps de séchage est fixé à 19 h. Les résultats des mesures de cohésion sont réunis dans le tableau 2.

**Tableau 2**

| Emulsion mise en oeuvre dans l'enrobé | Diamètre médian (µm) | Cohésion (kg) |
|---|---|---|
| S1 | 6,1 | 25 |
| S2 | 2,6 | 25 |
| C3 | 1,3 | 26 |
| C4 | 0,7 | 28 |
| E5 | 0,5 | 45 |
| E6 | 0,4 | 55 |

### Exemple 2

On prépare selon la méthode décrite au paragraphe « préparation de solutions de tensioactif concentrées », une solution à 31 % en poids de tensioactif contenant un mélange de 50% de suif dipropylène triamine oxypropylée (Polyram® SL) et 50% de suif propylène diamine (commercialisé par CECA S.A. sous la dénomination Dinoram® S). Avec cette solution de tensioactif concentrée et selon la méthode décrite au paragraphe « préparation de l'émulsion », on fabrique une émulsion conforme à l'invention (E8). A titre comparatif, une émulsion (S7) est fabriquée avec ce même mélange de tensioactif selon une méthode industrielle classique avec un moulin colloïdal (groupe de production de laboratoire de marque Emulbitume).

Un enrobé à froid de composition équivalente à celle décrite dans l'exemple 1 est fabriqué avec chacune de ces émulsions et testé en cohésion selon le mode opératoire décrit au paragraphe « fabrication et mesure de cohésion des enrobés », les résultats sont réunis dans le tableau 3.

**Tableau 3**

| Emulsion | Teneur en émulsifiant dans l'émulsion (kg /t) | Diamètre médian (µm) | Cohésion (kg) |
|---|---|---|---|
| S7 | 13 | 3,5 | 27 |
| E8 | 13 | 0,5 | 55 |

## Revendications

1. Emulsion bitumineuse dont le diamètre médian est inférieur ou égal à 0,6 µm et préférentiellement inférieur ou égal à 0,5 µm, contenant au moins un tensioactif anionique ou cationique.

2. Emulsion bitumineuse cationique selon la revendication 1, **caractérisée en ce qu'**elle contient au moins un tensioactif cationique choisi parmi les alkyl(ène)polyamines, les alkyl(ène)polyamines oxyalkylées, les sels d'alky(ène)lammonium quaternaire, les alkyl(ène)amidoamines et leurs dérivés de cyclisation alkyl(ène)imidazolines, avec une chaîne alkyle comprenant entre 8 et 22 atomes de carbone, et de préférence au moins un acide.

3. Emulsion bitumineuse selon la revendication 1 ou 2 **caractérisée en ce qu'**elle contient au moins un cotensioactif nonionique.

4. Procédé de préparation d'une émulsion bitumineuse telle que définie dans l'une quelconque des revendications 1 à 3, **caractérisé en ce que** :
a/ le ou les tensioactif(s), éventuellement en présence d'acide dans le cas d'émulsion cationique ou en présence d'une base dans le cas d'émulsion anionique, sont formulés sous forme d'une solution aqueuse concentrée (> 30% massique)
b/ on procède à l'ajout progressif de bitume chauffé à une température comprise entre 50 et 120°C et avec un débit contrôlé à la solution concentrée de tensioactif(s) maintenue sous agitation, jusqu'à à ce que la teneur en bitume de l'émulsion à la fin de cette première phase d'émulsification soit supérieure ou égale à 90 % en poids,
c/ puis la teneur en bitume de l'émulsion est abaissée jusqu'à une teneur comprise de préférence entre 60 % et 80 % en poids par dilution sous agitation avec de l'eau dont la température est comprise entre 20 et 90°C, et de préférence entre 40 et 80 °C.

5. Enrobés à froid et graves-émulsions **caractérisés en ce que** l'émulsion mise en oeuvre pour l'enrobage est telle que définie dans l'une quelconque des revendications 1 à 3.

6. Matériaux obtenus par enrobage ou par mise en contact de granulats, de matériaux de recyclage, d'agrégats d'enrobé (ou mélange de ces produits) et d'une émulsion bitumineuse telle que définie dans l'une des revendications 1 à 3.

7. Tapis routiers obtenus par compactage d'un matériau selon la revendication 6.
